# EUROPEAN PATENT APPLICATION

(11) **EP 0 628 278 A1**
(43) Date of publication of application: **14.12.1994**
(21) Application number: 94303659.0
(22) Date of filing: 23.05.1994
(51) Int. Cl.: A47K 13/16, B32B 27/10

(54) **Flushable, laminated toilet seat cover**

(30) Priority: 07.06.1993 US 73831
(71) Applicant: SCOTT PAPER COMPANY, Philadelphia, PA 19113 (US)
(72) Inventor: Breyer, Walter H., Wallingford, Pennsylvania 19086 (US); Brown, Lawrence M., Sewall, New Jersey 08080 (US)
(74) Representative: W.P. Thompson & Co.

(57) **Abstract**

A multi-ply flushable toilet seat cover e.g. for preventing residual water and urine droplets on a toilet seat from penetrating through the cover to the skin of the user. In one form the cover (10) includes first and second tissue webs (14,16) having a basis weight in the range of from about 4 pounds to about 50 pounds per ream, and a water soluble plastic film (18) sandwiched therebetween. The water soluble plastic film (18) may be attached to the tissue webs (14,16) by means of embossing, hot embossing, adhesives, heat sealing, or the like. The layer of tissue placed against he toilet seat absorbs the water or urine droplets thereon. Through the wicking properties of the tissue, the liquid is spread over a wider area thereof, thereby preventing liquid in sufficient quantity to dissolve through a relatively smaller area of the water soluble plastic film to come into direct contact with such a relatively smaller area of the water soluble plastic film.

## Description

This invention relates generally to disposable, multi-ply, sanitary products, and more particularly, to flushable, laminated toilet seat covers.

Numerous disposable toilet seat covers are known in the prior art. Many of such prior art toilet seat covers are laminated and are intended to be flushable after use. One such toilet seat cover is taught in U.S. Patent No. 4,352,214 to Belz. Toilet seat cover taught in such patent comprises a layer of textile waste fibers partially imbedded in a layer of water soluble foil such as polyvinyl alcohol. Alternatively, the fibers may be attached to a layer of polyvinyl alcohol by means of an adhesive. Preferably, a sealing layer is attached to the side of the foil opposite the layer of fibers. The sealing layer is waterproof or water repellent. Because both the adhesive and the foil are water soluble, the fibers become detached therefrom when the cover is placed in an agueous environment. The sealing layer, which is only a few microns in thickness, is said to have little stability once it becomes detached from the foil and thus, the cover is intended to be flushable.

U.S. Patent No. 3,263,241 to Saulson teaches a flexible laminated, flushable sheet, intended to be used as a disposable liner for bed pans. The first layer consists of a cellulosic fiber web. A thermoplastic material is applied to the web such as by extrusion. The thickness of the thermoplastic coating is in the range of 0.0001 to 0.001 inch. Apparently, the thermoplastic coating will disintegrate in the turbulence created by flushing a toilet.

Although the prior art teaches a number of disposable toilet seat covers which serve as barriers to moisture which may be present on a toilet seat, and further which are flushable, typical of such prior art seat covers is that the moisture barrier layer is water insoluble. Thus, such toilet seat covers create a potential flushing hazard, particularly, in low water volume systems which create little turbulent flushing action.

It is therefore an object of the present invention to provide a laminated or multi-ply, flushable toilet seat which acts as a barrier to moisture, wherein the barrier layer is water soluble.

Briefly stated, the foregoing and other features, objects and advantages of the present invention will become readily apparent upon reading the detail and description, claims and drawings set forth hereinafter. These features, objects and advantages are accomplished e.g. by sandwiching between two layers of sanitary tissue, a layer of polyvinyl alcohol film. In practice, the user of a public toilet, when faced with a toilet seat having residual water or urine thereon, will either move to another stall, or, proceed to remove the wetness from the toilet seat with toilet tissue. In either case, the use of disposable toilet seat covers has become very popular. The user, upon wiping any residual moisture from the seat, typically would prefer to have some barrier between his or her person and the seat. When wetness is encountered with the flushable toilet seat cover of the present invention, the layer of tissue facing the toilet seat absorbs the residual moisture and causes it to wick or spread over a larger area of that layer of tissue. Thus, a large concentration of water or urine is prevented from contacting a small area of the water soluble film. Solubilization of the film in localized spots is thereby prevented or, at least delayed to the point that the film will not allow the moisture to pass therethrough during the time a user normally might use a water closet. However, when use of the flushable toilet seat cover of the present invention is completed, the toilet seat cover can be dropped into the toilet bowl and flushed. The abundance of water in the bowl causes the water soluble film to dissolve, and the flushing action or turbulence causes the flushable tissue to break apart as the toilet seat cover components are transported into the sanitary sewer system.

The invention will now be further described by way of example with reference to the accompanying drawings, in which:-
Figure 1 is an isometric view of the flushable toilet seat cover of the present invention.
Figure 2 is a cross-sectional view taken along line 2-2 Figure 1.

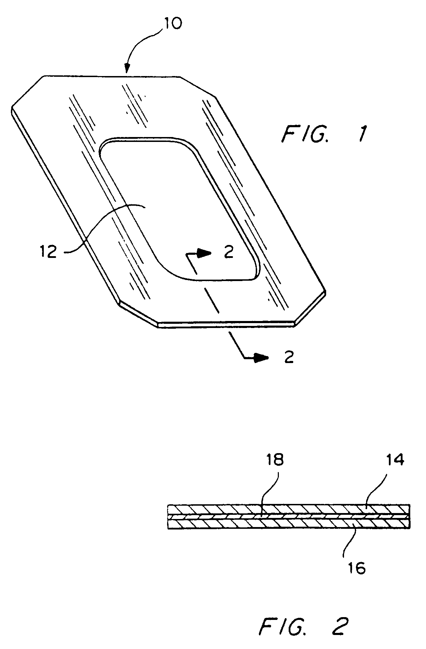

Turning first to Figure 1, there is shown the laminated, flushable toilet seat cover 10 of the present invention. Cover 10 is generally oval in shape and includes an orifice 12 therethrough such that the disposable cover 10 can be placed on an existing toilet seat as is typical of disposable toilet seat covers.

Looking next at Figure 2, is can be seen that cover 10 is comprised of three (3) layers. Top layer 14 is an absorbent cellulosic fiber web with little or no wet strength. Bottom layer 16 is also an absorbent cellulosic fiber web with little or no wet strength. Layers 14 and 16 are preferably made from a toilet tissue web. Sandwiched between layers 14 and 16 is a water soluble plastic film 18. The user sits on layer 14 with layer 16 resting on the toilet seat. Thus, an residual wetness on the toilet seat is contacted by layer 16. When layer 16, being an absorbent layer of bath tissue, encounters droplets on the toilet seat, the natural wicking action of layer 16 spreads those droplets through a larger area of layer 16. For the purposes of this invention, wicking may be defined as the movement of liquid by capillary action through the pore structure of the web. The water soluble plastic film 18 acts as barrier to such water droplets passing therethrough. The water or urine droplets must first dissolve a portion of film 18 in order to pass into layer 14. However, the wicking action of layer 16 prevents a great enough volume of the moisture from collecting and contacting a point location of film 18 to dissolve an opening through film 18.

Film 18 is preferably made of polyvinyl alcohol (PVOH). Polyvinyl alcohol film is a readily available water soluble plastic film having a rate of water solubility which can be modified or adjusted by formulation techniques. Layers 14, 16 and film 18 can be held together by thermal bonding, by mechanical interaction such as embossing, by adhesives, or some combination of these three laminating techniques. Heat embossing is the preferred method of holding layers 14, 16 and film 18 together. However, the use of an adhesive is straight forward. Further, lamination may be accomplished simply by partially dissolving the surface of film 18 and applying layers 14 and 16 thereto. The bottom layer or ply 14 provides wicking and absorbency. The top layer or ply 16 provides comfort. Although it is not necessary that layers or plies 14, 16 be structurally identical, it is preferable that they are. In such manner, the user does not need to make a determination as to which side of the flushable cover 10 is to be placed against the toilet seat. However, if it desired to instruct a user on how to use a cover 10, it may be beneficial to make layers 14, 16 different colors. Then, for example, the user can be instructed to place the "blue" side down against the toilet seat leaving the "white" side up.

Although the preferred structure of layers or plies 14, 16 are typical bath tissue, it is conceivable that nonwoven fabrics could be used for such layers or plies. However, the use of materials such as an airlay, wetlay, or spunlace nonwoven would require that such nonwoven have little or no wet strength, and that it be flushable. In order to be flushable, such nonwoven would, of course, have to break up in the normal turbulence of the flushing action of the toilet.

The tissue used to form layers 14, 16 should have a basis weight in the range of from about 4 to about 50 pounds per ream. Preferably the basis weight for plies 14, 16 should be in the range from about 10 to about 25 pounds per ream. (For purposes of this invention, a ream is defined as 3000 square feet.) The lower range is governed by difficulty in forming the tissue web and handling it, while the upper range is governed by increasing difficulty in flushing a paper web having a larger basis weight. The tissue web should contain little or no wet strength resin since a web with any substantial wet strength will cause problems in flushing.

The water soluble plastic film 18 can be a preformed film or a layer of material applied to one of layers 14, 16. It is imperative that the water soluble plastic film be soluble in water at ambient temperatures. It is conceivable that water soluble plastic films other than polyvinyl alcohol can be used for film 18. Although no testing has been done, it is believed that polycyclic amides such polyvinyl pyrolidone, polyethers such as polyethylene oxide and polypropylene oxide, and polyamino acids from the animal group, as well as starch films could serve as film 18. When using polyvinyl alcohol for film 18, preferably, the thickness of the layer of polyvinyl alcohol should be in the range of from approximately 1/4 mil to approximately 4 mils. Preferably, the thickness of the layer of polyvinyl alcohol should be in the range of from about 1/2 mil to about 2 mils.

It should be understood that whether layers 14, 16 are tissue or nonwoven webs, such layers must be flushable and must transport liquid through wicking. As such, although cellulosic fiber webs such as toilet tissue are preferred, the invention can be practiced with other webs. Therefore, such layers 14, 16 can be made with non-cellulosic fibers, or blends of cellulosic and non-cellulosic fibers.

A ring test was developed in order to measure the rate of horizontal wicking across bottom layer 16 versus penetration through film 18 in order to test the suitability of the structure of the present invention to prevent moisture from contacting the skin of the user. In such test, a water droplet having a volume of 0.2 cc containing 4% red food color dye was placed on a three and one-quarter inch (3-1/4") diameter sample (held at the edges) of the material to be tested. The time required for the solution to penetrate the sample was measured and, simultaneously, the area of horizontal spread across layer 16 was estimated at the time of penetration. The test was repeated using an aqueous 1% sodium chloride solution also containing 4% red food color dye. A volume of 0.2 cc was chosen as representative of the size of a droplet or droplets of urine or water splashed from the bowl on a toilet seat which may be inadvertently overlooked by the user prior to placing the toilet seat cover 10 of the present invention, onto a toilet seat. Table A below represents tabulation of tests results for eight (8) different structures tested in this manner.

As can be seen from Table A, Sample 1, which was a single layer of polyvinyl alcohol film (Chris Craft Mono-Sol® 8030 having a thickness of 2 mils as manufactured by Chris Craft Industrial Products, Inc. of Gary, Indiana) failed after a period of 56 seconds with the solution of water and food coloring, and failed after a period of 70 seconds when faced with an aqueous 1% sodium chloride solution. In both cases, the dye solution remained approximately where it was applied.

**TABLE A**

| SAMPLE | PENETRATION TIME (SEC) | | AREA OF WICKING (SQ. IN.) | |
|---|---|---|---|---|
| | H₂O | NaCl SOLUTION | H₂O | NaCl SOLUTION |
| #1 | 56 | 70 | 0.3 | 0.4 |
| #2 | 0.8 | 0.4 | 0.3 | 0.9 |
| #3 | 0.3 | 0.5 | 0.1 | 0.9 |
| #4 | 2.5 | 1.3 | 0.1 | 0.9 |
| #5 | DNP* | DNP* | 2.1 | 2.0 |
| #6 | DNP* | DNP* | 1.8 | 1.9 |
| #7 | DNP* | DNP* | 3.5 | 2.8 |
| #8 | 3.8 | 1.1 | 1.1 | 1.5 |

| | | | | |
|---|---|---|---|---|
| * DNP - Did Not Penetrate - test ended after 1000 seconds | | | | |

Sample No. 2 was a structure of 3 unbonded plies of toilet paper, each ply having a basis weight of 15 pounds/ream. As would be expected, both solutions struck through the 3-plies very quickly (less than one second for each solution) with little wicking occurring.

Sample No. 3 was a currently available 1-ply toilet seat cover marketed under the name of "Personal Seat" by Scott Paper Company. Again the penetration time was less than 1 second and wicking was insubstantial.

Sample No. 4 consisted of 3 unbonded plies of the same Personal Seat toilet seat covers used for Sample No. 3. Penetration was still very quick through the three (3) plies (2.5 seconds for the water and red dye solution, 1.3 seconds for the aqueous NaCl-red dye solution). Again, the area of wicking was insubstantial.

Sample No. 5 as tested was made with three (3) unbonded plies. The top ply and bottom ply were toilet paper each having a basis weight of 15 pounds per ream. The middle ply was a polyvinyl alcohol film (Chris Craft Mono-Sol® 8030 having a thickness of 2 mils). For both the water/dye solution and the aqueous 1% sodium chloride/dye solution, there was no penetration of the film. The test was ended after a period of 1000 seconds. It can be seen that there was substantial wicking in both instances causing the 0.2 cc droplet to spread over areas of 2.1 square inches, and 2.0 square inches, respectively, thereby reducing substantially the volume of liquid actually placed in contact with the film at any particular point on the film.

Sample No. 6 was made up of the same three (3) plies used in Sample No. 5. However, the three (3) plies were lightly bonded with a bar heat sealer. Again, there was no penetration through the layer of film and substantial wicking occurred in the bottom layer to spread the 0.2 cc droplet over an enlarged area.

Sample No. 7 consisted of the same three (3) plies used in Sample Nos. 5 and 6. However, with Sample No. 7, the three (3) plies were bonded and lightly embossed with a heated, patterned embossing roll. Again, no penetration was recorded with either solution. Very significant wicking occurred in the bottom layer of tissue to spread the contact area of the 0.2 cc droplet against the layer of film.

Sample No. 8 again used the same three (3) plies used in Sample Nos. 5 through 7. As with Sample No. 7, the three (3) plies were bonded with a heated, patterned embossing roll. However, significant pressure in the range of approximately 125 pounds per lineal inch of nip was applied to the heated embossing roll. Although some wicking occurred in the bottom layer, the penetration time to the film was quite rapid. It is believed that the added pressure used in Sample No. 8 to heat pattern emboss the sample actually created perforations through the film which resulted in the rapid penetration. It is, of course, imperative with the structure of the present invention, that the film layer 18 be continuous and without perforations if it is to act a moisture barrier.

The first and second Samples show that the components of the proposed toilet seat cover do not promote wicking without penetration. In fact, they exhibit penetration with substantially no wicking at all. Sample 3 shows an existing product that does not exhibit wicking without penetration. Sample No. 4 shows that this is not improved by merely adding layers of the same material to that existing product. Samples 5, 6 and 7 show that the unbonded or properly bonded components of the present invention exhibit a wicking of droplets encountered to prevent penetration of the liquid through the film layer.

From the foregoing, it will be seen that this invention is one well adapted to attain all of the ends and objects hereinabove set forth together with other advantages which should be apparent to those skilled in the art and which are inherent to the apparatus.

It will be understood that certain features and subcombinations are of utility and may be employed with reference to other features in subcombinations. This is contemplated by and is within the scope of the claims.

As many possible embodiments may be made of the invention without departing from the scope thereof, it is to be understood that all matter herein set forth or shown in the accompanying drawings is to be interpreted as illustrative and not in a limiting sense.

## Claims

1. A multi-ply flushable toilet seat cover comprising:
(a) a first fibrous web capable of wicking, said first fibrous web having no substantial wet strength;
(b) a second fibrous web capable of wicking, said second fibrous web having no substantial wet strength;
(c) a water soluble plastic film residing between said first and second fibrous webs.

2. A multi-ply flushable toilet seat cover comprising:
(a) a first tissue web having a basis weight in the range of from about 4 pounds to about 50 pounds per ream;
(b) a second tissue web having a basis weight in the range of from about 4 pounds to about 50 pounds per ream;
(c) a water soluble plastic film residing between said first and second tissue webs.

3. A multi-ply flushable toilet seat cover comprising:
(a) a first tissue web having a basis weight in the range of from about 10 pounds to about 25 pounds per ream;
(b) a water soluble plastic film attached on one side thereof to said first tissue web;
(c) a second tissue web having a basis weight in the range of from about 10 pounds to about 25 pounds per ream, said second tissue web attached the side of said water soluble plastic film opposite said first tissue web, said water soluble plastic film residing between said first and second cellulosic fiber webs.

4. A multi-ply flushable toilet seat cover comprising:
(a) a first tissue web having a basis weight in the range of from about 4 to about 50 pounds per ream;
(b) a water soluble plastic film;
(c) a means for attaching said first tissue web to one side of said water soluble plastic film;
(d) a second tissue web having a basis weight in the range of from about 4 to about 50 pounds per ream;
(e) a means for attaching said second tissue web to the side of said water soluble plastic film opposite said first tissue web, said water soluble plastic film residing between said first and second cellulosic fiber webs.

5. A multi-ply flushable toilet seat cover as claimed in claim 1 or 2 further comprising:
means for attaching said first and second webs to said water soluble plastic film.

6. A multi-ply flushable toilet seat cover as claimed in claim 5 wherein:
said means for attaching is an adhesive.

7. A multi-ply flushable toilet seat cover as claimed in claim 5 wherein:
said means for attaching is heat sealing.

8. A multi-ply flushable toilet seat cover as claimed, in claim 5 wherein:
said means for attaching is embossing.

9. A multi-ply flushable toilet seat cover as claimed in claim 5 wherein:
said means for attaching is by way of a heated embossing roll.

10. A multi-ply flushable toilet seat cover as claimed in any one of the preceding claims, wherein:
said water soluble plastic film is polyvinyl alcohol.
